# NEUE EUROPÄISCHE PATENTSCHRIFT

(11) **EP 1 643 223 B2**
(45) Veröffentlichungstag und Bekanntmachung des Hinweises auf die Entscheidung über den Einspruch: **04.05.2011**
(45) Hinweis auf die Patenterteilung: 02.05.2007
(21) Anmeldenummer: 04104813.3
(22) Anmeldetag: 30.09.2004
(51) Int. Cl.: G01G 21/24

(54) **Kraftübertragungsvorrichtung für eine Waage**
Force transmission device for a weighing apparatus
Dispositif de transmission de force pour une balance

(43) Veröffentlichungstag der Anmeldung: 05.04.2006
(73) Patentinhaber: Mettler-Toledo AG, 8606 Greifensee (CH)
(72) Erfinder: Burkhard, Hans-Rudolf, 8492 Wila (CH); Metzger, Andreas, 8708 Männedorf (CH); Tschopp, Ernst, 8637 Laupen (CH)

(56) Entgegenhaltungen:
- EP-A- 0 518 202
- EP-A1- 1 195 588
- EP-B1- 0 080 702
- CH-A5- 652 207
- DE-A1- 19 837 875
- DE-A1- 19 845 023
- DE-C1- 19 754 172
- DE-C2- 19 743 832
- DE-U- 29 509 829
- DE-U- 29 809 833
- DE-U1- 81 351 828
- US-A- 4 509 610
- US-A1- 2004 003 948

## Beschreibung

Die Erfindung betrifft eine Kraftübertragungsvorrichtung für eine Kraftmesseinrichtung, insbesondere eine Waage, mit einer Parallelführung, die einen feststehenden und einen beweglichen Parallelogrammschenkel aufweist, mit einem mindestens einen Hebel aufweisenden Hebelwerk und mit mindestens einem der Krafteinleitung in das Hebelwerk beziehungsweise der Kraftweiterleitung im Hebelwerk dienenden längssteifen, biegeelastischen und mindestens ein in einer Parallelogrammebene auslenkbares erstes Dünnstellenbiegelager aufweisenden Koppelelement, wobei das Hebelwerk und das mindestens eine Koppelelement integrierter Bestandteil eines Materialblocks sind.

Eine Kraftübertragungsvorrichtung findet häufig ihren Einsatz in solchen Kraftmesseinrichtungen, insbesondere Waagen, welche zur Umsetzung der Kraftwirkung einer auf eine Waagschale aufgelegten Last in ein elektrisches Signal nach dem Prinzip der elektromagnetischen Kraftkompensation arbeiten. Der Zweck der Kraftübertragungsvorrichtung besteht darin, die der aufgelegten Last entsprechende Gewichtskraft, beispielsweise in einer Waage, soweit zu untersetzen, dass die dadurch gewonnene Kraft in ein an den verfügbaren Belastungsbereich einer Kraftmesseinrichtung angepasstes Messsignal umgewandelt werden kann. Die Auslenkung der Hebel und damit der zugehörigen Biegelager in einer solchen nach dem Prinzip der elektromagnetischen Kraftkompensation arbeitenden Kraftmesseinrichtung sind bekanntermassen sehr klein.

Eine Kraftmesseinrichtung der beschriebenen Art weist eine Parallelführung mit einem einen feststehenden Bereich bildenden Parallelogrammschenkel, an den über zwei Parallelogrammlenker ein vertikal beweglicher Parallelogrammschenkel angelenkt ist, auf. Ferner besitzt sie ein über ein längssteifes biegeelastisches Koppelelement an das Parallelogramm zur Krafteinleitung gekoppeltes, die Kraft untersetzendes Hebelwerk, welches aus mindestens einem Hebel besteht und an dem feststehenden Bereich des Parallelogramms abgestützt ist. Ein Koppelelement ist vorwiegend - jedoch nicht zwingend - beidseitig von einem eine jeweilige Angriffstelle bildenden Dünnstellenbiegelager begrenzt. Im Fall eines aus mehreren Hebeln bestehenden Hebelwerks sind die Hebelarme nachgeschalteter Hebel über jeweils ein Koppelelement miteinander verbunden und über jeweils ein Dünnstellenbiegelager ebenfalls an dem feststehenden Bereich oder an einem vorgängigen Hebel abgestützt.

Jeder Punkt eines beweglichen Teils der Parallelführung bewegt sich im Wesentlichen in einer Ebene, einer so genannten Parallelogrammebene. Im Folgenden steht der Begriff "die Parallelogrammebene" stellvertretend für jede derartige Ebene.

Eine solche Kraftmesseinrichtung ist in der EP 0 518 202 A1 beschrieben, wobei in deren Kraftübertragungsvorrichtung das über mindestens einen an einem feststehenden Bereich abgestützten Übersetzungshebel verfügende Hebelwerk und das mindestens eine längssteife, biegeelastische Koppelelement durch Bildung materialfreier Bereiche in einem einstückigen Materialblock gefertigt sind. Die materialfreien Bereiche sind in Form von dünnen den Materialblock durchtrennenden Schnittlinien ausgebildet. Die dünnen Schnittlinien, welche vorzugsweise mittels Funkenerosion erzeugt werden, durchsetzen den Materialblock senkrecht zur Parallelogrammebene. Der den mindestens einen Hebel bildende Materialbereich hängt mit dem den feststehenden Bereich bildenden Materialbereich lediglich durch ein eine Abstützstelle bildendes Dünnstellenbiegelager und durch eine lokalisierte Angriffsstelle des Koppelelements zusammen.

Aus der EP 1 054 242 A1 ist ein nach dem Prinzip der elektromagnetischen Kraftkompensation arbeitender Wägeaufnehmer bekannt, dessen wesentliche Teile - Parallelogramm, Hebelwerk, Koppelelemente und Abstützstellen - aus einem einzigen Materialblock herausgearbeitet sind, wobei ein gehäusefester Grundkörper des Materialblocks sich in den Raum zwischen den beiden Parallelogrammlenkern hinein erstreckt und einen Abstützpunkt für einen ersten Hebel bildet. Mindestens ein Hebel ist, zumindest teilweise, in zwei Hebel aufgeteilt und mindestens ein Koppelelement in zwei Teilkoppelelemente, die symmetrisch auf beiden Seiten eines vorkragenden Teils des gehäusefesten Grundkörpers angeordnet sind.

Das Herausarbeiten der einzelnen Bestandteile der Kraftübertragungsvorrichtung aus einem einzigen Materialblock kann entweder durch Fräsen oder Erodieren erfolgen, ebenso sind Guss- oder Extrusionsverfahren zur Herstellung einer solchen zumindest teilweise monolithischen Kraftübertragungsvorrichtung denkbar.

Wie bereits die EP 0 518 202 A1 offenbart, ist das den beweglichen Parallelogrammschenkel mit dem ersten Hebel des Hebelwerks verbindende Koppelelement durch jeweils eine beidseitig senkrecht zur Parallelogrammebene, zwischen seinen Dünnstellenbiegelagern in seinem mittigen Bereich angeordnete Ausnehmung gekennzeichnet, wodurch sich die Materialstärke des Koppelelements dort verringert. Infolge der dadurch erzielten Biegsamkeit des Koppelelements quer zur Parallelogrammebene, werden etwaige geringfügige Verkantungen des beweglichen Parallelogrammschenkels infolge ausermittiger Einleitung der zu messenden Kraft vom Koppelelement aufgenommen und ihre Übertragung an das Hebelwerk und einen damit verbundenen Messwandler reduziert.

In der EP 0 612 985 A1 wird eine stärkere Unterdrückung des durch einen gegenüber der Parallelführung seitlich versetzten Angriffs der zu messenden Kraft dadurch erreicht, dass eine Lagebeziehung zwischen der Achse der Querverdrehung der Parallelführung bei Seitenlast und der räumlichen Lage des quer zur Parallelogrammebene biegeelastischen Bereichs des Koppelelements hergestellt wird, namentlich dadurch, dass der quer zur Parallelogrammebene biegeelastische Bereich des Koppelelements in den Bereich der Achse einer bei aussermittiger Belastung in der zur Parallelogrammebene auftretenden Querverdrehung des beweglichen Parallelogrammschenkels gelegt wird.

Nachteilig bei den angeführten Massnahmen zur Unterdrückung seitlich in die Kraftübertragungsvorrichtung eingeleiteter Kräfte, welche im Falle von deren Verwendung in einer Waage durch aussermittig aufgelegtes Wägegut hervorgerufen werden kann, ist, dass für hochauflösende Kraftmesseinrichtungen diese Unterdrückung nicht vollständig ist und - wenn auch in kleinem Masse - Querkräfte vom Koppelelement auf das Hebelsystem übertragen werden, das heisst ein so genannter Eckenlastfehler im Messsignal beobachtbar ist.

Es besteht daher das Bedürfnis nach einer verbesserten Unterdrückung dieser seitlich in eine Kraftübertragungsvorrichtung eingeleiteten Kräfte, insbesondere, wenn diese in hochauflösenden Waagen Verwendung finden.

Diese Aufgabenstellung wird durch die Merkmale gemäss dem Anspruch 1 gelöst. In einer Kraftübertragungsvorrichtung mit einer Parallelführung, die einen feststehenden und einen beweglichen Parallelogrammschenkel aufweist, mit einem mindestens einen Hebel aufweisenden Hebelwerk und mit mindestens einem der Krafteinleitung in das Hebelwerk beziehungsweise der Kraftweiterleitung im Hebelwerk dienenden längssteifen, biegeelastischen und mindestens ein in der Parallelogrammebene auslenkbares erstes Dünnstellenbiegelager aufweisenden Koppelelement, sind das Hebelwerk und das mindestens eine Koppelelement integrierter Bestandteil eines Materialblocks. Das mindestens eine Koppelelement ist mit mindestens zwei quer zur Auslenkung des ersten Dünnstellenbiegelagers auslenkbaren zweiten Dünnstellenbiegelagern versehen.

Auf diese Weise wird eine gegenüber dem Stand der Technik verbesserte Entkopplung des Hebelwerks vom beweglichen Parallelogrammschenkel hinsichtlich auftretender Querkräfte erzielt. Diese Entkopplung ist weitestgehend unabhängig von der auf die Kraftübertragungsvorrichtung wirkenden Last. Dies ist eine Folge der Lokalisierung der Biegeelastizität des Koppelelements quer zur Auslenkung dessen mindestens einem ersten Dünnstellenbiegelager vermittels mindestens zweier zweiter Dünnstellenbiegelager.

Bevorzugt sind die zweiten Dünnstellenbiegelager durch jeweils zwei einander gegenüberliegende, einen dünnen Materialbereich begrenzende, in ihrer Längserstreckung in der Parallelogrammebene verlaufende Vertiefungen ausgestaltet.

In einer bevorzugten Ausgestaltung der Kraftübertragungsvorrichtung weist das mindestens eine Koppelelement zwei erste Dünnstellenbiegelager auf, mit denen es einerseits am beweglichen Parallelogrammschenkel und andererseits am ersten Hebel der Hebelwerks angreift, wobei die zweiten Dünnstellenbiegelager zwischen den ersten Dünnstellenbiegelagern in einem mittigen Bereich des Koppelelements angeordnet sind.

In einer vorteilhaften Ausführungsform ist die jeweilige Längserstreckung der Vertiefungen senkrecht zur Längserstreckung des mittigen Bereichs des Koppelelements ausgerichtet.

Die zweiten Dünnstellenbiegelager können in spezifischen Ausgestaltungen entweder durch Bohrungen von der schmalen Endfläche des im Wesentlichen quaderförmigen Materialblocks her gebildet sein oder durch längliche Vertiefungen, die durch lokale Materialwegnahme, insbesondere mittels Fräsen aus dem Materialblock entstehen.

Die zweiten Dünnstellenbiegelager besitzen in vorteilhaften Ausführungsformen ein teilweise kreisförmiges, dreieckiges, fünfeckiges oder rechteckiges Profil.

In einer besonders vorteilhaften Weiterbildung, in welcher der Materialblock quaderförmig ausgeformt ist, ist über den Bereich des gesamten Koppelelements jeweils eine von den beiden in der Parallelogrammebene liegenden, beziehungsweise zu dieser parallel verlaufenden Oberflächen des Materialblocks kommende Ausnehmung im Materialblock vorhanden, wodurch das Koppelelement in seiner Materialstärke verringert wird. Dabei sind die zweiten Dünnstellenbiegelager durch weitere Vertiefungen innerhalb dieser Ausnehmungen gebildet.

Die Kraftübertragungsvorrichtung ist bezüglich einer mittleren Parallelogrammebene in bevorzugter Weise symmetrisch ausgestaltet.

In einer anderen Ausgestaltung der Kraftübertragungsvorrichtung ist das Parallelogramm ebenfalls integrierter Bestandteil des Materialblocks.

Bevorzugte Ausführungsformen und Ausgestaltungen der erfindungsgemässen Kraftübertragungsvorrichtung sowie der Koppelelemente sind in den stark schematisierten Zeichnungen dargestellt und im Folgenden anhand der Figuren im Detail beschrieben. Es zeigen:
- Figur 1:: eine Kraftübertragungsvorrichtung mit einem Koppelelement in einer ersten Ausführungsform in dreidimensionaler Darstellung,
- Figur 2:: eine stark vergrösserte Ansicht des Koppelelements der Kraftübertragungsvorrichtung aus Figur 1 in der Ansicht auf eine in der Parallelogrammebene liegende ausgedehnte Oberfläche der Kraftübertragungsvorrichtung,
- Figur 3:: ein isoliertes Koppelelement in der Ausführungsform gemäss Figur 1 in dreidimensionaler Darstellung,
- Figur 4:: eine Kraftübertragungsvorrichtung in einer zweiten Ausführungsform in der Ansicht auf eine in der Parallelogrammebene liegende ausgedehnte Oberfläche der Kraftübertragungsvorrichtung,
- Figur 5:: eine stark vergrösserte Ansicht des Koppelelements der Kraftübertragungsvorrichtung aus Figur 4,
- Figuren 6a bis 6d:: verschiedene Ausgestaltungen der Vertiefungen in einer Schnittdarstellung eines stark vergrösserten Ausschnitts des Koppelelements.

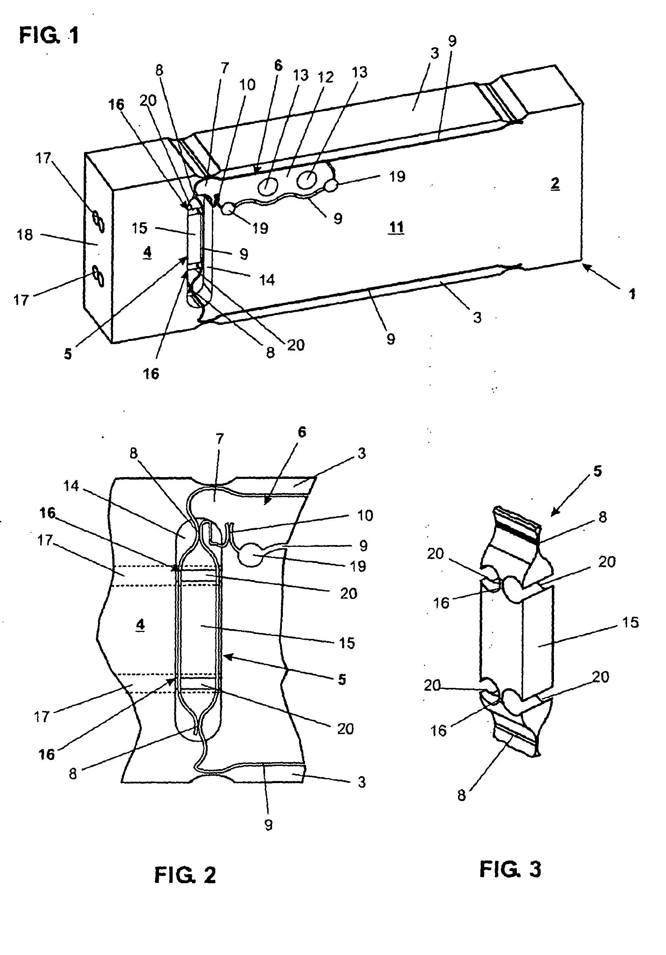

Figur 1 zeigt in perspektivischer Darstellung eine Kraftübertragungsvorrichtung 1 für eine Kraftmesseinrichtung in einer Waage, die einstückig aus einem im Wesentlichen quaderförmigen Materialblock gefertigt ist. Diese weist eine Parallelführung mit einem feststehenden Parallelogrammschenkel 2 und einem über zwei Parallelogrammlenker 3 an diesen angelenkten beweglichen Parallelogrammschenkel 4 auf. Letzterer ist mit einer hier nicht sichtbaren Waagschale verbunden und wird durch Belastung derselben gegenüber dem feststehenden Parallelogrammschenkel 2 vertikal in Richtung der Schwerkraft ausgelenkt. Die Kraftübertragungsvorrichtung 1 weist ein Koppelelement 5 auf, das eine in den beweglichen Parallelogrammschenkel 4 eingeleitete Kraft auf ein Hebelwerk überträgt. In der gezeigten Kraftübertragungsvorrichtung 1 besitzt das Hebelwerk lediglich einen der Kraftuntersetzung dienenden Hebel 6, welcher an seinem kurzen Hebelarm 7 mittels eines ersten Dünnstellenbiegelagers 8 mit dem Koppelelement 5 verbunden ist. Das Koppelelement 5 ist über ein weiteres erstes Dünnstellenbiegelager 8 mit dem beweglichen Parallelogrammschenkel 4 verbunden. Eine Auslenkung des beweglichen Parallelogrammschenkels 4 in Richtung der Schwerkraft bewirkt somit über das Koppelelement 5 eine Zugkraft am kurzen Hebelarm 7 des durch ein Dünnstellenbiegelager 10 an einem Ausleger 11 des feststehenden Parallelogrammschenkels 2 abgestützten Hebels 6, wodurch der lange Hebelarm 12 des Hebels 6 in die entgegen gesetzte Richtung auslenkt. Parallelführung, Koppelelement 5 und Hebel 6 sind in dem im Wesentlichen quaderförmigen Materialblock dergestalt ausgebildet, dass dessen Materialbereiche durch materialfreie Bereiche in Form von dünnen, den Materialblock senkrecht zu seiner in der Parallelogrammebene liegenden ausgedehnten Oberfläche durchsetzenden Schnittlinien 9 voneinander getrennt sind. Die Schnittlinien 9 werden bevorzug mittels Funkernerosion erzeugt, wobei die Löcher 19, dem Einbringen des Erosionsdrahts dienen. Die gezeigte Kraftübertragungsvorrichtung 1 ist symmetrisch bezüglich einer in der Mitte des Materialblocks liegenden, parallel zu dessen ausgedehnten Oberflächen verlaufenden Symmetrieebene ausgestaltet.

Der Hebelarm 12 ist mit Durchgangsbohrungen 13 versehen, an denen mittels Schrauben eine hier nicht sichtbare Verlängerung des Hebelarms 12 angebracht werden kann, wobei diese mit einem hier ebenfalls nicht sichtbaren Messwandler verbunden werden kann. Der Messwandler kann eine im Magnetfeld eines Permanentmagneten angeordnete Tauchspule aufweisen, wobei die Kraftmesseinrichtung eine nach dem Prinzip der elektromagnetischen Kraftkompensation arbeitende darstellt. In der Kraftmesseinrichtung können jedoch auch andere wegarme Messwandler, beispielsweise schwingende Saiten, Verwendung finden.

Das Koppelelement 5 weist in seinem mittigen Bereich 15 nahe der ersten Dünnstellenbiegelager 8 jeweils beidseitig eine Vertiefung 20 auf, die sowohl im unteren als auch im oberen Bereich des Koppelelements 5 ein zweites Dünnstellenbiegelager 16 bilden, dessen Lagerachse in der Parallelogrammebene liegt, das heisst, welches quer zur Parallelogrammebene auslenkbar ist. Die Vertiefungen 20 entstehen durch präzise angeordnete Bohrungen 17 von der schmalen Seitenfläche 18 des auslenkbaren Parallelogrammschenkels 4 in den Materialblock. Zusätzlich weist das Koppelelement 5 über seine gesamte Ausdehnung eine Ausnehmung 14 auf, wodurch die Materialstärke des Koppelelements 5 in seiner Ausdehnung quer zur Parallelogrammebene reduziert ist. Dabei gelangen die Bohrungen 17 im Bereich der Ausnehmung 14 teilweise ausserhalb des Materialbereichs des Koppelelements 5, wodurch die Vertiefungen 20 gebildet werden, welche durch paarige Anordnung ihrerseits die Dünnstellenbiegelager 16 begrenzen. Ausserhalb der Vertiefungen 20 ist die Materialstärke des Koppelelements 5 noch hoch genug, so dass eine störende lastabhängige Verformung des mittigen Bereichs 15 des Koppelelements 5 weitestgehend unterbleibt.

Die Bohrungen 17, die jeweils paarweise verlaufend nahe dem oberen und dem unteren ersten Dünnstellenbiegelager 8 in der Parallelogrammebene angeordnet beziehungsweise auslenkbar sind, besitzen innerhalb der paarigen Anordnung einen derart geringen Abstand zueinander, dass ein Dünnstellenbiegelager 16 mit einer minimalen Materialstärke zwischen etwa 50 und 1000 µm gebildet wird. Diese Dimensionierung des kleinsten Abstands innerhalb eines Dünnstellenbiegelagers 16 ist abhängig vom Lastbereich, für den die die Kraftübertragungsvorrichtung 1 enthaltende Kraftmesseinrichtung spezifiziert ist.

Die Figur 2 zeigt in der Seitenansicht eine Ausschnittvergrösserung der Kraftübertragungsvorrichtung 1 aus Figur 1 im Bereich des Koppelelements 5. Durch gestrichelte Linien sind die in die die zweiten Dünnstellenbiegelager 16 bildenden Vertiefungen 20 mündenden Bohrungen 17 zu erkennen. Mittels der Ausnehmung 14 ist die Materialstärke der Kraftübertragungsvorrichtung 1 im gesamten Bereich des Koppelelements 5 reduziert, wobei im Bereich der zweiten Dünnstellenbiegelager 16 eine weitere lokalisierte Reduktion der Materialstärke vorhanden ist. Damit weist das Koppelelement 5 eine Biegsamkeit quer zur Parallelogrammebene auf, wodurch eine mögliche Querverdrehung des beweglichen Parallelogrammschenkels 4 nicht über das Koppelelement 5 an den Hebel 6 übertragen wird. Letzterer weist quer zur Parallelogrammebene eine hohe Materialstärke auf, die sich über die gesamte Dicke des Materialblocks erstreckt und dadurch diesen und insbesondere dessen Dünnstellenbiegelager 10 unempfindlich gegenüber einer Querverdrehung macht. Somit bewirkt eine Kombination eines mit zweiten Dünnstellenbiegelagern 16 versehenen Koppelelements 5 mit einem über seine gesamte Dicke abgestützten Hebel 6 eine weitere Verbesserung hinsichtlich des Vermeidens der Einleitung von Querkräften in das Hebelwerk und ein nachgeschaltetes Messwandlersystem.

Die Figur 3 zeigt in perspektivischer Darstellung ein isoliertes Koppelelement 5 einer Kraftübertragungsvorrichtung 1, wobei dieses weitestgehend entlang der Schnittlinien 9 aus dem Materialblock herausgelöst wurde. Hierbei ist die gegenseitige Anordnung der ersten Dünnstellenbiegelager 8 zu den zweiten Dünnstellenbiegelagern 16 besonders deutlich zu erkennen. Der Abstand zwischen jeweils einem ersten 8 und einem zweiten 16 Dünnstellenbiegelager ist bevorzugt hinsichtlich der Spannungsverteilung im Material des Koppelelements 5 optimiert.

Die Lagerachsen der beiden ersten Dünnstellenbiegelager 8 verlaufen quer zur Parallelogrammebene und die Lagerachsen der zweiten Dünnstellenbiegelager 16 liegen bevorzugt in einer mittleren Parallelogrammebene - der Symmetrieebene der Kraftübertragungsvorrichtung 1. Die Schnittlinie dieser beiden Ebenen erstreckt sich bevorzugt parallel zur Längserstreckung des Koppelelements 5 und verläuft innerhalb dessen Materialbereich. Der Abstand des oberen zweiten Dünnstellenbiegelagers 16 vom oberen ersten Dünnstellenbiegelager 8 ist in der in Figur 3 gezeigten Ausführungsform gleich demjenigen des unteren zweiten Dünnstellenbiegelagers 16 vom unteren ersten Dünnstellenbiegelager 8.

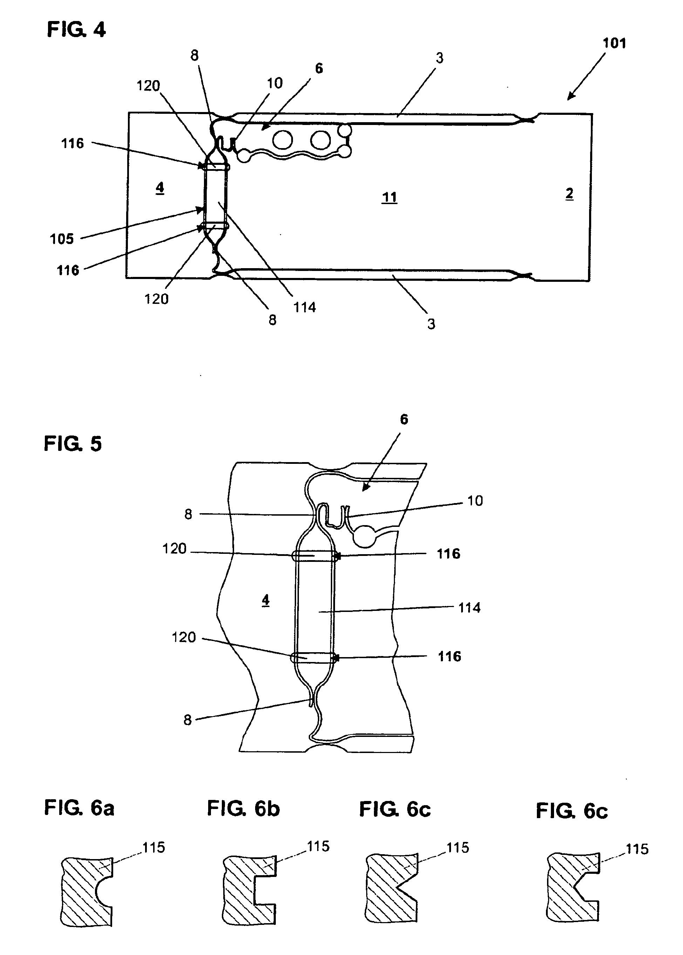

In den Figuren 4 und 5 ist eine weitere Ausführungsform einer Kraftübertragungsvorrichtung 101 gezeigt, wobei in Figur 4 die gesamte Kraftübertragungsvorrichtung 101 und in Figur 5 eine Ausschnittvergrösserung im Bereich des Koppelelements 105 dargestellt ist. Elemente, die mit denjenigen aus den Figuren 1 und 2 übereinstimmen sind mit den selben Bezugszeichen versehen und an dieser Stelle nicht noch einmal beschrieben. Bei der Kraftübertragungsvorrichtung 101 wurde im Bereich des Koppelelements 105 auf eine Ausnehmung verzichtet. Die zweiten Dünnstellenbiegelager 116, die auch hier durch in der Parallelogrammebene verlaufende längliche Vertiefungen 120 gebildet werden, werden durch lokale Materialwegnahme, beispielsweise mittels Fräsen, aus dem Materialblock erzeugt. Um eine möglichst geringe Materialstärke im Bereich der zweiten Dünnstellenbiegelager 116 zu erhalten, kann es hier bevorzugt sein, die Vertiefungen 120 gegenüber den in den Figuren 1 und 2 gezeigten etwas breiter auszugestalten. Eine Ausgestaltung des Koppelelements 105 gemäss den Figuren 4 und 5 bietet sich insbesondere für schmale Kraftübertragungsvorrichtungen 101 an.

Es versteht sich von selbst, dass eine Kraftübertragungsvorrichtung 101, wie sie in den Figuren 4 und 5 dargestellt ist und bei welcher die zweiten Dünnstellenbiegelager 116 mittels Fräsen im mittigen Bereich 115 des Koppelelements 105, mit einer ebenfalls sich über die gesamte Ausdehnung des Koppelelements 105 erstreckenden Ausnehmung versehen sein kann.

Die Figuren 6a bis 6d zeigen die Vertiefungen 20, 120 in verschiedenen Ausführungsformen in einer Darstellung eines Ausschnitts eines Koppelelements 5, 105 im Schnitt durch eine jeweilige Vertiefung 20, 120, senkrecht zu ihrer Längserstreckung. Je nach der gewählter Methode zum Erzeugen der Vertiefungen 20, 120, sei dies mittels Bohren von der schmalen Seitenfläche 18 des Materialblocks, mittels Fräsen oder mittels Senkerodieren, kann eine Vertiefung ein teilweise kreisförmiges (Figur 6a), rechteckiges (Figur 6b), dreieckiges (Figur 6c) oder fünfeckiges (Figur 6d) Profil besitzen. Besonders vorteilhaft für Dünnstellenbiegelager 16, 116 mit möglichst geringer Materialstärke und definierter Lagerachse sind die in den Figuren 6c und 6d gezeigten Ausführungsformen.

Die erfindungsgemässe Kraftübertragungsvorrichtung 1, 101 wurde in bevorzugten Ausgestaltungen beschrieben und dargestellt. Anhand der erfindungsgemässen Lehre sind jedoch weitere fachmännische Ausgestaltungen realisierbar. Insbesondere ist ein Koppelelement mit ersten 8 und zweiten 16, 116 Dünnstellenbiegelagern auch in einer Kraftübertragungsvorrichtung, die ein Hebelwerk mit zwei oder drei Hebeln aufweist, welche zum Beispiel in der EP 0 518 202 A1 beschrieben sind, verwendbar. Des Weiteren ist in einem solchen Fall das Hinzufügen von zweiten Dünnstellenbiegelagern 16, 116 nicht auf das den beweglichen Parallelogrammschenkel 4 mit dem kurzen Hebelarm des ersten Hebels verbindende Koppelelement 5, 105 beschränkt. Auch Koppelelemente, die nachfolgende Hebel miteinander verbinden, können entsprechend ausgestaltet sein.

Im Falle des Vorhandenseins einer internen Kalibriervorrichtung in einer Waage, wobei das Kalibriergewicht beispielsweise an einem zusätzlichen Hebelarm oder einer zusätzlichen Parallelführung angreift, ist es denkbar, in der Kraftübertragungsvorrichtung ein Koppelelement zum Einkoppeln der Kraft des internen Kalibriergewichts in das Hebelwerk der Kraftübertragungsvorrichtung mit mindestens zwei zweiten Dünnstellenbiegelagern zu versehen. Diese zweiten Dünnstellenbiegelager können in zu den in den Figuren 1 bis 6 gezeigten analoger Weise ausgestaltet sein.

Es sollen hier weitere Ausbildungen eines Koppelements, bei welchem mehr als zwei zweite Dünnstellenbiegelager vorhanden sind, nicht vom Erfindungsgedanken ausgeschlossen werden.

Es versteht sich von selbst, wie auch bereits im Zusammenhang mit der Figur 1 erwähnt, dass die Kraftübertragungsvorrichtung, das heisst Parallelführung, Koppelelement und Hebelwerk, integrierter Bestandteil eines Materialblocks ist. Es sind auch Ausführungsformen bekannt, welche beispielsweise in der EP 0 518 202 A1 beschrieben sind, in welchen lediglich das mindestens eine Koppelelement und das Hebelwerk, integrierter Bestandteil eines Materialblocks sind, welcher in eine Parallelführung eingebaut werden kann.

### Bezugszeichenliste

- 1, 101: Kraftübertragungsvorrichtung
- 2: feststehender Parallelogrammschenkel
- 3: Parallelogrammlenker
- 4: beweglicher Parallelogrammschenkel
- 5, 105: Koppelelement
- 6: Hebel
- 7: kurzer Hebelarm
- 8: erstes Dünnstellenbiegelager des Koppelelements
- 9: Schnittlinien
- 10: Dünnstellenbiegelager des Hebels
- 11: Ausleger
- 12: langer Hebelarm
- 13: Durchgangsbohrungen
- 14: Ausnehmung
- 15, 115: mittiger Bereich des Koppelelements
- 16, 116: zweite Dünnstellenbiegelager des Koppelelements
- 17: Bohrungen
- 18: schmale Seitenfläche
- 19: Löcher
- 20, 120: Vertiefungen

## Patentansprüche

1. Kraftübertragungsvorrichtung (1, 101) für eine Kraftmesseinrichtung, insbesondere eine Waage, mit einer Parallelführung, die einen feststehenden (2) und einen beweglichen (4) Parallelogrammschenkel aufweist, mit einem mindestens einen Hebel (6) aufweisenden Hebelwerk und mit mindestens einem der Krafteinleitung in das Hebelwerk beziehungsweise der Kraftweiterleitung im Hebelwerk dienenden längssteifen biegeelastischen und mindestens ein in der Parallelogrammebene auslenkbares erstes Dünnstellenbiegelager (8) aufweisenden Koppelelement (5, 105), wobei das Hebelwerk und das mindestens eine Koppelelement (5, 105) integrierter Bestandteil eines Materialblocks sind, **dadurch gekennzeichnet, dass** das mindestens eine Koppelelement (5, 105) mit mindestens zwei quer zur Auslenkung des ersten Dünnstellenbiegelagers (8) auslenkbaren zweiten Dünnstellenbiegelagern (16, 116) versehen ist.

2. Kraftübertragungsvorrichtung nach Anspruch 1, **dadurch gekennzeichnet, dass** die zweiten Dünnstellenbiegelager (16, 116) durch jeweils zwei einander gegenüberliegende, einen dünnen Materialbereich begrenzende, in ihrer Längserstreckung in der Parallelogrammebene verlaufende Vertiefungen (20, 120) ausgestaltet sind.

3. Kraftübertragungsvorrichtung nach Anspruch 1 oder 2, **dadurch gekennzeichnet, dass** das mindestens eine Koppelelement (5, 105) zwei erste Dünnstellenbiegelager (8) aufweist, mit denen es einerseits am beweglichen Parallelogrammschenkel (4) und andererseits am ersten Hebel (6) der Hebelwerks angreift, wobei die zweiten Dünnstellenbiegelager (16, 116) zwischen den ersten Dünnstellenbiegelagern (8) in einem mittigen Bereich (15, 115) des Koppelelements (5, 105) angeordnet sind.

4. Kraftübertragungsvorrichtung nach Anspruch 3, **dadurch gekennzeichnet, dass** die jeweilige Längserstreckung der Vertiefungen (20, 120) senkrecht zur Richtung der Längserstreckung des mittigen Bereichs (15, 115) des Koppelelements (5, 105) ausgerichtet ist.

5. Kraftübertragungsvorrichtung nach einem der Ansprüche 1 bis 4, **dadurch gekennzeichnet, dass** der Materialblock im Wesentlichen quaderförmig ist und die zweiten Dünnstellenbiegelager (16) durch Bohrungen (17) von der schmalen Endfläche (18) des Materialblocks her gebildet sind.

6. Kraftübertragungsvorrichtung nach einem der Ansprüche 1 bis 4, **dadurch gekennzeichnet, dass** die zweiten Dünnstellenbiegelager (116) durch längliche Vertiefungen (120) gebildet sind, die durch lokale Materialwegnahme aus dem Materialblock, insbesondere mittels Fräsen oder Senkerodieren, entstehen.

7. Kraftübertragungsvorrichtung nach Anspruch 5 oder 6, **dadurch gekennzeichnet, dass** die zweiten Dünnstellenbiegelager (16, 116) ein teilweise kreisförmiges, dreieckiges, fünfeckiges oder rechteckiges Profil besitzen.

8. Kraftübertragungsvorrichtung nach einem der Ansprüche 2 bis 7, **dadurch gekennzeichnet, dass** das mindestens eine erste (8) und die zweiten (16, 116) Dünnstellenbiegelager jeweils eine Lagerachse aufweist, wobei die Lagerachse des mindestens einen ersten Dünnstellenbiegelagers (8) quer zur Parallelogrammebene verläuft und die Lagerachsen der zweiten Dünnstellenbiegelager (16, 116) bevorzugt in einer mittleren Parallelogrammebene liegen, und dass die Schnittlinie dieser beiden Ebenen sich bevorzugt parallel zur Längserstreckung des Koppelelements (5, 105) erstreckt und innerhalb dessen Materialbereich verläuft.

9. Kraftübertragungsvorrichtung nach einem der Ansprüche 3 bis 8, **dadurch gekennzeichnet, dass** der Abstand des oberen zweiten Dünnstellenbiegelagers (16, 116) vom oberen ersten Dünnstellenbiegelager (8) gleich demjenigen des unteren zweiten Dünnstellenbiegelagers (16, 116) vom unteren ersten Dünnstellenbiegelager (8) ist.

10. Kraftübertragungsvorrichtung nach einem der Ansprüche 5 bis 9, **dadurch gekennzeichnet, dass** im Bereich des gesamten Koppelelements (5) dieses durch jeweils eine von den beiden in der Parallelogrammebene liegenden, beziehungsweise zu dieser parallel verlaufenden Oberflächen des Materialblocks kommende Ausnehmung (14) im Materialblock in seiner Materialstärke verringert ist, wobei die zweiten Dünnstellenbiegelager (16) durch Vertiefungen (20) innerhalb dieser Ausnehmungen (14) gebildet sind.

11. Kraftübertragungsvorrichtung nach einem der Ansprüche 1 bis 10 **dadurch gekennzeichnet, dass** diese Kraftübertragungsvorrichtung bezüglich einer mittleren Parallelogrammebene symmetrisch ausgestaltet ist.

12. Kraftübertragungsvorrichtung nach einem der Ansprüche 1 bis 11, **dadurch gekennzeichnet, dass** die Parallelführung ebenfalls integrierter Bestandteil des Materialblocks ist.

## Claims

1. Force-transmitting mechanism (1, 101) for a force-measuring device, in particular for a balance with a parallel-guiding mechanism (1, 101) comprising a stationary (2) and a movable (4) parallelogram leg, with a lever mechanism comprising at least one lever (6), and with at least one coupling element (5, 105) that serves to introduce a force into the lever mechanism or to transfer the force within the lever mechanism, wherein the coupling element (5, 105) is stiff in its lengthwise direction but bends elastically, comprising at least one first flexure joint (8) that has a thin material connection and is movable in the plane of the parallelogram, and wherein the lever mechanism and the at least one coupling element (5, 105) are integral parts of a material block, **characterized in that** the at least one coupling element (5, 105) comprises at least two second flexure joints (16, 116) having thin material connections whose flexibility is in the direction transverse to the bending of the first flexure joint (8).

2. Force-transmitting mechanism according to claim 1, **characterized in that** each of the second flexure joints (16, 116) is formed by two grooves (20, 120) that are located opposite each other, delimit between each other a thin material connection, and extend lengthwise in the parallelogram plane.

3. Force-transmitting mechanism according to claim 1 or 2, **characterized in that** the at least one coupling element (5, 105) comprises two first flexure joints (8) through which one end of the coupling element (5, 105) connects to the movable parallelogram leg (4) and the other end connects to the first lever (6) of the lever mechanism, with the second flexure joints (16, 116) being arranged between the first flexure joints (8) in a mid-portion (15, 115) of the coupling element (5, 105).

4. Force-transmitting mechanism according to claim 3, **characterized in that** the grooves (20, 120) extend lengthwise in a direction that is perpendicular to the lengthwise dimension of the mid-portion (15, 115) of the coupling element (5, 105).

5. Force-transmitting mechanism according to one of the claims 1 to 4, **characterized in that** the material block is substantially brick-shaped and the second flexure joints (16) are formed by drilling bore holes (17) from the narrow end surface (18) of the material block.

6. Force-transmitting mechanism according to one of the claims 1 to 4, **characterized in that** the second flexure joints (116) are formed by cutting grooves (120) which are produced by removing material locally from the material block, in particular by milling or sink erosion.

7. Force-transmitting mechanism according to claim 5 or 6, **characterized in that** the second flexure joints (16, 116) have a profile that is shaped like a part of a circle or has a triangular, pentagonal or rectangular shape.

8. Force-transmitting mechanism according to one of the claims 2 to 7, **characterized in that** the at least one first flexure joint (8) and the second flexure joints (16, 116) have respective pivotal axes, wherein the pivotal axis of the at least one first flexure joint (8) runs transverse to the parallelogram plane and the pivotal axes of the second flexure joints (16, 116) preferably lie in a median plane of the parallelogram, so that the line of intersection of the respective planes of the first and second flexure joints is preferably parallel to the lengthwise dimension of the coupling element (5, 105) and runs inside the material-filled space of the coupling element (5, 105).

9. Force-transmitting mechanism according to one of the claims 3 to 8, **characterized in that** the distance of the upper second flexure joint (16, 116) from the upper first flexure joint (8) is equal to the distance of the lower second flexure joint (16, 116) from the lower first flexure joint (8).

10. Force-transmitting mechanism according to one of the claims 5 to 9, **characterized in that** the material width of the entire coupling element (5) is reduced by laterally recessed surface areas (14) entering from both of the sides of the material block that are parallel to the parallelogram plane, wherein the second flexure joints (16) are formed by grooves (20) within the laterally recessed surface areas (14).

11. Force-transmitting mechanism according to one of the claims 1 to 10, **characterized in that** the force-transmitting mechanism is configured symmetrically relative to a median parallelogram plane.

12. Force-transmitting mechanism according to one of the claims 1 to 11, **characterized in that** the parallel-guiding linkage is likewise an integral part of the material block.

## Revendications

1. Dispositif de transmission de force (1, 101) pour un dispositif de mesure de force, en particulier, une balance, avec un guide parallèle, qui présente une branche de parallélogramme fixe (2) et une branche de parallélogramme mobile (4), avec un système de levier présentant au moins un levier (6) et avec au moins un élément de couplage (5, 105) élastique en flexion, rigide dans la longueur, servant à l'application de force dans le système de levier ou à la transmission de force dans le système de levier et présentant au moins un premier palier de flexion d'emplacement mince (8) pouvant dévier dans le plan du parallélogramme, le système de levier et le au moins un élément du couplage (5, 105) étant un composant intégré d'un bloc de matériau, **caractérisé en ce que** le au moins un élément de couplage (5, 105) est doté de second paliers de flexion d'emplacement mince (16, 116) pouvant dévier transversalement à la déviation du premier palier de flexion d'emplacement mince (8).

2. Dispositif de transmission de force selon la revendication 1, **caractérisé en ce que** les seconds paliers de flexion d'emplacement mince (16, 116) sont conçus par respectivement deux cavités (20, 120) se faisant face, délimitant une zone de matériau mince, agencées dans leur extension longitudinale dans le plan du parallélogramme.

3. Dispositif de transmission de force selon la revendication 1 ou 2, **caractérisé en ce que** le au moins un élément de couplage (5, 105) présente deux premiers paliers de flexion d'emplacement mince (8), avec lesquels il s'applique d'une part sur la branche de parallélogramme (4) mobile et d'autre part sur le premier levier (6) du système de levier, les seconds paliers de flexion d'emplacement mince (16, 116) étant disposés entre les premiers paliers de flexion d'emplacement mince (8) dans une zone (15, 115) centrale de l'élément de couplage (5, 105).

4. Dispositif de transmission de force selon la revendication 3, **caractérisé en ce que** l'extension longitudinale respective des cavités (20, 120) est orientée perpendiculairement à la direction de l'extension longitudinale de la zone (15, 115) centrale de l'élément de couplage (5, 105).

5. Dispositif de transmission de force selon l'une quelconque des revendications 1 à 4, **caractérisé en ce que** le bloc de matériau a sensiblement une forme de parallélépipède et les seconds paliers de flexion d'emplacement mince (16) sont formés par des percements (17) à partir de la surface d'extrémité (18) étroite du bloc de matériau.

6. Dispositif de transmission de force selon l'une quelconque des revendications 1 à 4, **caractérisé en ce que** les seconds paliers de flexion d'emplacement mince (116) sont formés par des cavités (120) allongées, qui se forment par un enlèvement de matériau local dans le bloc de matériau, en particulier par fraisage ou enfonçage par électroérosion.

7. Dispositif de transmission de force selon la revendication 5 ou 6, **caractérisé en ce que** les seconds paliers de flexion d'emplacement mince (16, 116) présentent un profil partiellement circulaire, triangulaire, pentagonal ou rectangulaire.

8. Dispositif de transmission de force selon l'une quelconque des revendications 2 à 7, **caractérisé en ce que** le au moins un premier palier de flexion d'emplacement mince (8) et les seconds paliers de flexion d'emplacement mince (16, 116) présentent chacun un axe de palier, l'axe de palier du au moins un premier palier de flexion d'emplacement mince (8) étant agencé transversalement au plan de parallélogramme et les axes des seconds paliers de flexion d'emplacement mince (16, 116) étant situés de préférence dans un plan de parallélogramme central, et **en ce que** la ligne de coupe de ces deux plans s'étend de préférence parallèlement à l'extension longitudinale de l'élément de couplage (5, 105) et est agencée à l'intérieur de sa zone de matériau.

9. Dispositif de transmission de force selon l'une quelconque des revendications 3 à 8, **caractérisé en ce que** la distance du second palier de flexion d'emplacement mince (16, 116) supérieur au premier palier de flexion d'emplacement mince (8) supérieur est égale à celle du second palier de flexion d'emplacement mince (16, 116) inférieur au premier palier de flexion d'emplacement mince (8) inférieur.

10. Dispositif de transmission de force selon l'une quelconque des revendications 5 à 9, **caractérisé en ce que**, dans la zone de l'ensemble de l'élément de couplage (5), celui-ci est réduit dans son épaisseur de matériau par respectivement un évidemment (14) arrivant des deux surfaces du bloc de matériau, disposées dans le plan de parallélogramme ou agencées parallèlement à celui-ci, dans le bloc de matériau, les seconds paliers de flexion d'emplacement mince (16) étant formés par des cavités (20) à l'intérieur de ces évidemments (14).

11. Dispositif de transmission de force selon l'une quelconque des revendications 1 à 10, **caractérisé en ce que** ce dispositif de transmission de force est conçu de façon symétrique par rapport à un plan de parallélogramme central.

12. Dispositif de transmission de force selon l'une quelconque des revendications 1 à 11, **caractérisé en ce que** le guide parallèle est également un composant intégré du bloc de matériau.
